# EUROPÄISCHE PATENTSCHRIFT

(11) **EP 2 638 123 B1**
(45) Veröffentlichungstag und Bekanntmachung des Hinweises auf die Patenterteilung: **31.08.2016**
(21) Anmeldenummer: 11778629.3
(22) Anmeldetag: 04.11.2011
(51) Int. Cl.: C09K 5/04, F25B 15/00

(54) **ARBEITSMEDIUM FÜR ABSORPTIONSWÄRMEPUMPEN**
WORKING MEDIUM FOR ABSORPTION HEAT PUMPS
FLUIDE DE TRAVAIL POUR POMPES À CHALEUR À ABSORPTION

(30) Priorität: 08.11.2010 EP 10190356
(43) Veröffentlichungstag der Anmeldung: 18.09.2013
(73) Patentinhaber: Evonik Degussa GmbH, 45128 Essen (DE)
(72) Erfinder: SEILER, Matthias, 64347 Griesheim (DE); SCHNEIDER, Rolf, 64285 Darmstadt (DE); ZEHNACKER, Olivier, 44263 Dortmund (DE); SCHNEIDER, Marc-Christoph, 64285 Darmstadt (DE)
(86) Internationale Anmeldenummer: PCT/EP2011/069402
(87) Internationale Veröffentlichungsnummer: WO 2012/062656

(56) Entgegenhaltungen:
- EP-A1- 2 087 930
- US-A- 3 276 217
- US-A1- 2007 144 186
- U.DOMANSKA ET AL: "solubility of 1-Alkyl-3-ethylimidazolium-based ionic liquids in water and 1-octanol", JOURNAL CHEMICAL ENGINEERING DATA, 2008, Seiten 1126-1132, XP002631001,
- ZHOU X ET AL: "The vapor surfactant theory of absorption and condensation enhancement", PROCEEDINGS OF THE INTERNATIONAL SORPTION HEAT PUMP CONFERENCE, SCIENCE PRESS, BEIJING; CHINA; SHANGHAI, CHINA, 1. Januar 2002 (2002-01-01), Seiten 341-346, XP008134895, ISBN: 978-1-880132-06-7 in der Anmeldung erwähnt

## Beschreibung

Die Erfindung betrifft ein Arbeitsmedium für Absorptionswärmepumpen, das ein Kältemittel, eine ionische Flüssigkeit als Sorptionsmittel und ein Additiv zur Verbesserung des Stoff- und Wärmeübergangs umfasst.

Klassische Wärmepumpen beruhen auf einem Kreislauf eines Kältemittels über einen Verdampfer und einen Kondensator. Im Verdampfer wird ein Kältemittel verdampft, wobei durch die vom Kältemittel aufgenommene Verdampfungswärme einem ersten Medium Wärme entzogen wird. Das verdampfte Kältemittel wird dann mit einem Kompressor auf einen höheren Druck gebracht und bei einer höheren Temperatur als bei der Verdampfung im Kondensator kondensiert, wobei die Verdampfungswärme wieder frei wird und auf einem höheren Temperaturniveau Wärme an ein zweites Medium abgegeben wird. Anschließend wird das verflüssigte Kältemittel wieder auf den Druck des Verdampfers entspannt.

Die klassischen Wärmepumpen haben den Nachteil, dass sie viel mechanische Energie für die Kompression des dampfförmigen Kältemittels verbrauchen. Absorptionswärmepumpen weisen demgegenüber einen verringerten Bedarf an mechanischer Energie auf. Absorptionswärmepumpen weisen zusätzlich zu dem Kältemittel, dem Verdampfer und dem Kondensator einer klassischen Wärmepumpe noch ein Sorptionsmittel, einen Absorber und einen Desorber auf. Im Absorber wird das verdampfte Kältemittel bei dem Druck der Verdampfung in dem Sorptionsmittel absorbiert und anschließend im Desorber bei dem höheren Druck der Kondensation durch Wärmezufuhr wieder aus dem Sorptionsmittel desorbiert. Die Verdichtung des flüssigen Arbeitsmediums aus Kältemittel und Sorptionsmittel erfordert weniger mechanische Energie als die Kompression des Kältemitteldampfs in einer klassischen Wärmepumpe, an Stelle des Verbrauchs an mechanischer Energie tritt die zur Desorption des Kältemittels eingesetzte Wärmeenergie. Der Wirkungsgrad einer Absorptionswärmepumpe wird berechnet als das Verhältnis des zum Kühlen bzw. Heizen genutzten Wärmestroms zu dem Wärmestrom, der dem Desorber für den Betrieb der Absorptionswärmepumpe zugeführt wird, und wird als "Coefficient of Performance", abgekürzt COP, bezeichnet.

Ein großer Teil der technisch eingesetzten Absorptionswärmepumpen verwendet ein Arbeitsmedium, das Wasser als Kältemittel und Lithiumbromid als Sorptionsmittel enthält. Bei diesem Arbeitsmedium kann durch den Zusatz von geringen Mengen eines C6-12-Alkohols der Stoff- und Wärmeübergang im Absorber verbessert werden und so ein höherer Wirkungsgrad COP erzielt werden, wie z.B. aus US 3,276,217, US 3,580,759 und US 3,609,087 bekannt ist. Technisch wird dazu überwiegend 2-Ethyl-1-hexanol in Mengen von ca. 100 ppm zugesetzt. Die Wirkung von 2-Ethyl-1-hexanol im Absorber beruht dabei auf der Adsorption des Alkohols aus der Dampfphase an die Flüssigkeitsoberfläche, die zu einer lokalen Herabsetzung der Oberflächenspannung führt und so eine Marangoni-Konvektion auslöst, die einen verbesserten Stoff- und Wärmeübergang bewirkt, wie aus X. Zhou, K. E. Herold, Proc. of the Int. Sorption Heat Pump Conf. 2002 (ISHPC '02), Seiten 341-346 bekannt ist. 2-Ethyl-1-hexanol hat eine Tensidwirkung und setzt die Oberflächenspannung von Wasser von 76 mN/m bei 20 °C auf ca. 50 mN/m herab. Die in Absorptionswärmepumpen verwendete Mischung von Wasser und Lithiumbromid hat eine gegenüber Wasser erhöhte Oberflächenspannung von 96 mN/m bei 57 Gew.-% LiBr, die durch den Zusatz von 2-Ethyl-1-hexanol auf Werte von ca. 40 mN/m herabgesetzt werden kann.

Arbeitsmedien, die Wasser als Kältemittel und Lithiumbromid als Sorptionsmittel enthalten, haben den Nachteil, dass eine Wasserkonzentration von 35 bis 40 Gew.-% im Arbeitsmedium nicht unterschritten werden darf, da es sonst zur Kristallisation von Lithiumbromid und dadurch zu Störungen bis hin zu einer Verfestigung des Arbeitsmediums kommen kann. Bei Absorptionskältemaschinen, die ein Arbeitsmedium mit Wasser als Kältemittel und Lithiumbromid als Sorptionsmittel verwenden, muss deshalb die Wärme im Absorber auf einem Temperaturniveau abgeführt werden, das in heißen Ländern eine Kühlung über einen Nasskühlturm erforderlich macht.

In WO 2005/113702 und WO 2006/134015 wurde vorgeschlagen, zur Vermeidung von Störungen durch Kristallisation des Sorptionsmittels Arbeitsmedien einzusetzen, die eine ionische Flüssigkeit mit organischen Kationen als Sorptionsmittel enthält.

US 2007/0144186 beschreibt Arbeitsmedien für Absorptionswärmepumpen, die Wasser als Kältemittel und eine ionische Flüssigkeit als Sorptionsmittel enthalten.

WO 2009/097930 beschreibt für solche Arbeitsmedien, die eine ionische Flüssigkeit mit organischen Kationen als Sorptionsmittel enthalten, den Zusatz von Tensidadditiven, die die Benetzung von Oberflächen durch das Arbeitsmedium verbessern. EP 2 093 278 A1 offenbart Fettalkohole, wie Isostearylalkohol und Oleylalkohol, als benetzungsfördernde Additive für ionische Flüssigkeiten.

U. Domanska et al., J. Chem. Eng. Data 53 (2008) 1126-1132, beschreibt Flüssig-flüssig-Phasengleichgewichte für binäre Mischungen aus einem 1-Alkyl-3-methylimidazoliumsalz und Wasser oder 1-Octanol.

Der Stand der Technik enthält jedoch keine Lehre zu Additiven, die bei Arbeitsmedien, die eine ionische Flüssigkeit mit organischen Kationen als Sorptionsmittel enthalten, den Stoff- oder Wärmeübergang in der Absorption einer Absorptionswärmepumpe verbessern können.

Ionische Flüssigkeiten zeigen in Mischung mit dem Kältemittel Wasser ein völlig anderes Verhalten als das Sorptionsmittel Lithiumbromid, da sie im Gegensatz zu LiBr die Oberflächenspannung im Vergleich zu Wasser nicht erhöhen, sondern deutlich herabsetzen, wie beispielsweise aus W. Liu et al, J. Mol. Liquids 140 (2008) 68-72 bekannt ist. Die ionische Flüssigkeit zeigt dabei ein ähnliches tensidisches Verhalten wie 2-Ethyl-1-hexanol und reichert sich in einer Mischung mit Wasser an der Flüssigkeitsoberfläche an. Ein Fachmann musste deshalb davon ausgehen, dass ein Zusatz von 2-Ethyl-1-hexanol zu einer Mischung aus ionischer Flüssigkeit und Wasser nicht in gleicher Weise wie bei einer Mischung von Lithiumbromid und Wasser zu einer starken Verminderung der Oberflächenspannung führt und deshalb die bei Mischungen von Lithiumbromid und Wasser beobachtete Verbesserung des Stoff- und Wärmeübergangs bei einem Zusatz von 2-Ethyl-1-hexanol zu einer Mischung aus ionischer Flüssigkeit und Wasser ausbleibt.

Die Erfinder der vorliegenden Erfindung haben nun überraschend gefunden, dass entgegen dieser Erwartung der Zusatz schon von geringen Mengen eines einwertigen aliphatischen Alkohol mit 6 bis 10 Kohlenstoffatomen, wie 2-Ethyl-1-hexanol, zu einem Wasser als Kältemittel und eine ionische Flüssigkeit als Sorptionsmittel enthaltenden Arbeitsmedium in einer Absorptionswärmepumpe zu einer deutlichen Verbesserung des Stoff- und Wärmeübergangs bei der Absorption und einem höheren Wirkungsgrad COP führt. Ebenso überraschend kann durch den Zusatz eines solchen Alkohols auch bei Verwendung von Methanol oder Ethanol als Kältemittel eine Verbesserung des Stoff- und Wärmeübergangs bei der Absorption und ein höherer Wirkungsgrad COP erzielt werden.

Gegenstand der Erfindung ist dementsprechend ein Arbeitsmedium für Absorptionswärmepumpen, das mindestens ein Kältemittel, mindestens einen einwertigen aliphatischen Alkohol mit 6 bis 10 Kohlenstoffatomen und mindestens eine ionische Flüssigkeit aus mindestens einem organischen Kation und mindestens einem Anion umfasst.

Gegenstand der Erfindung ist außerdem eine Absorptionswärmepumpe, die einen Absorber, einen Desorber, einen Kondensator, einen Verdampfer und ein erfindungsgemäßes Arbeitsmedium umfasst.

Der Begriff Absorptionswärmepumpe umfasst erfindungsgemäß alle Vorrichtungen, mit denen Wärme bei einem niedrigen Temperaturniveau aufgenommen und bei einem höheren Temperaturniveau wieder abgegeben wird und die durch Wärmezufuhr zum Desorber angetrieben werden. Die erfindungsgemäßen Absorptionswärmepumpen umfassen damit sowohl Absorptionskältemaschinen und Absorptionswärmepumpen im engeren Sinn, bei denen Absorber und Verdampfer bei einem geringeren Arbeitsdruck als Desorber und Kondensator betrieben werden, als auch Absorptionswärmetransformatoren, bei denen Absorber und Verdampfer bei einem höheren Arbeitsdruck als Desorber und Kondensator betrieben werden. In Absorptionskältemaschinen wird die Aufnahme von Verdampfungswärme im Verdampfer zur Kühlung eines Mediums genutzt. In Absorptionswärmepumpen im engeren Sinn wird die im Kondensator und/oder Absorber freigesetzte Wärme zum Heizen eines Mediums genutzt. In Absorptionswärmetransformatoren wird die im Absorber freigesetzte Absorptionswärme zum Heizen eines Mediums genutzt, wobei die Absorptionswärme auf einem höheren Temperaturniveau als bei der Zufuhr von Wärme zum Desorber erhalten wird.

Das erfindungsgemäße Arbeitsmedium umfasst mindestens ein Kältemittel, mindestens einen einwertigen aliphatischen Alkohol mit 6 bis 10 Kohlenstoffatomen und mindestens eine ionische Flüssigkeit aus mindestens einem organischen Kation und mindestens einem Anion. Vorzugsweise umfasst das Arbeitsmedium dabei 4 bis 67 Gew.-% Kältemittel, 0,0001 bis 10 Gew.-% Alkohol mit 6 bis 10 Kohlenstoffatomen und 30 bis 95 Gew.-% ionische Flüssigkeit.

Das erfindungsgemäße Arbeitsmedium umfasst mindestens ein Kältemittel, das flüchtig ist, so dass bei der Verwendung des Arbeitsmediums in einer Absorptionswärmepumpe ein Teil des Kältemittels im Desorber durch Zufuhr von Wärme aus dem Arbeitsmedium verdampft werden kann. Das erfindungsgemäße Arbeitsmedium enthält als Kältemittel vorzugsweise Wasser, Methanol, Ethanol oder Mischungen dieser Kältemittel. Besonders bevorzugt ist das Kältemittel Methanol, Ethanol, eine Mischung von Methanol und Ethanol, eine Mischung von Ethanol mit Wasser oder eine Mischung von Methanol mit Wasser. Am meisten bevorzugt ist das Kältemittel Ethanol. Erfindungsgemäße Arbeitsmedien, die als Kältemittel Methanol, Ethanol oder Mischungen von Methanol oder Ethanol mit Wasser enthalten, können in Absorptionskältemaschinen zum Abkühlen auf Temperaturen von weniger als 0 °C eingesetzt werden. Erfindungsgemäße Arbeitsmedien, die als Kältemittel Wasser enthalten, bilden bei der Verwendung des Arbeitsmediums in einer Absorptionswärmepumpe keine zündfähigen Dämpfe.

Das erfindungsgemäße Arbeitsmedium umfasst außerdem mindestens einen einwertigen aliphatischen Alkohol mit 6 bis 10 Kohlenstoffatomen, der bei der Verwendung des Arbeitsmediums in einer Absorptionswärmepumpe im Absorber den Stoff- und Wärmeübergang bei der Absorption von Kältemittel verbessert. Der Alkohol ist vorzugsweise ein primärer Alkohol und weist vorzugsweise einen verzweigten Alkylrest auf. Als Alkohol eignen sich dabei prinzipiell alle Hexanole, Heptanole, Octanole, Nonanole, Decanole und deren Mischungen, wobei die Alkohole 2-Methyl-1-hexanol, 2-Ethyl-1-hexanol und 3,5,5-Trimethyl-1-hexanol bevorzugt sind und 2-Ethyl-1-hexanol besonders bevorzugt ist. Das erfindungsgemäße Arbeitsmedium umfasst vorzugsweise mindestens 0,0001 Gew.-%, besonders bevorzugt mindestens 0,001 Gew.-% und insbesondere mindestens 0,0015 Gew.-% des Alkohols mit 6 bis 10 Kohlenstoffatomen. Das erfindungsgemäße Arbeitsmedium umfasst vorzugsweise höchstens 10 Gew.-%, besonders bevorzugt höchstens 0,1 Gew.-% und insbesondere höchstens 0,05 Gew.-% des Alkohols mit 6 bis 10 Kohlenstoffatomen. Innerhalb dieser Grenzen wird der Anteil an Alkohol im Arbeitsmedium in Abhängigkeit von dem verwendeten Kältemittel und der verwendeten ionischen Flüssigkeit vorzugsweise so gewählt, dass bei möglichst geringer Menge an Alkohol eine ausreichende Steigerung des Stoff- und Wärmeübergangs im Absorber erzielt wird.

Das erfindungsgemäße Arbeitsmedium umfasst weiterhin mindestens eine ionische Flüssigkeit aus mindestens einem organischen Kation und mindestens einem Anion, die bei der Verwendung des Arbeitsmediums in einer Absorptionswärmepumpe als Sorptionsmittel für das Kältemittel wirkt. Der Begriff ionische Flüssigkeit bezeichnet dabei ein Salz oder eine Mischung von Salzen aus Anionen und Kationen, wobei das Salz bzw. die Mischung von Salzen einen Schmelzpunkt von weniger als 100°C aufweist. Der Begriff ionische Flüssigkeit bezieht sich dabei auf Salze oder Mischungen von Salzen frei von nichtionischen Stoffen oder Additiven. Vorzugsweise besteht die ionische Flüssigkeit aus einem oder mehreren Salzen von organischen Kationen mit organischen oder anorganischen Anionen. Die ionische Flüssigkeit weist vorzugsweise einen Schmelzpunkt von weniger als 20°C auf, um bei der Verwendung des Arbeitsmediums in einer Absorptionswärmepumpe eine Verfestigung der ionische Flüssigkeit im Sorptionsmittelkreislauf zu vermeiden.

Das oder die Anionen der ionischen Flüssigkeit können einfach, zweifach oder mehrfach negativ geladen sein und sind vorzugsweise einfach negativ geladen und besonders bevorzugt Anionen von monovalenten Säuren. Bevorzugt weisen das oder die Anionen der ionischen Flüssigkeit ein Molekulargewicht von höchstens 260 g/mol auf, besonders bevorzugt von höchstens 220 g/mol, insbesondere von höchstens 180 g/mol und am meisten bevorzugt von höchstens 160 g/mol. Die Beschränkung der molaren Masse des Anions verbessert die Ausgasungsbreite des Arbeitsmediums bei dem Betrieb einer Absorptionswärmepumpe.

Als Anionen eignen sich Anionen von monovalenten anorganischen Säuren, vorzugsweise Halogenide, Nitrat, Nitrit und Cyanat, sowie Anionen von monovalenten organischen Säuren, vorzugsweise von Carbonsäuren wie Formiat, Acetat, Propionat, Benzoat und Glycolat. Ebenso eignen sich Mono- und Dianionen von divalenten anorganischen Säuren, vorzugsweise Sulfat, Hydrogensulfat, Carbonat und Hydrogencarbonat, sowie Mono- und Dianionen von divalenten organischen Säuren, vorzugsweise Oxalat, Succinat und Malonat. Weiterhin eignen sich Mono-, Di- und Trianionen von trivalenten anorganischen Säuren, vorzugsweise Phosphat, Hydrogenphosphat und Dihydrogenphosphat. Weitere geeignete anorganische Anionen sind Tetrafluoroborat, Hexafluorophosphat, Hydroxid, Borate, Halogenantimonate, Halogencuprate, Halogenzinkate und Halogenaluminate. Weitere geeignete organische Anionen sind Anionen der Formeln R^{a}OSO₃⁻, R^{a}SO₃⁻, R^{a}OPO₃²⁻, (R^{a}O)₂PO₂⁻, R^{a}PO₃²⁻, R^{a}OCO2⁻, R^{a}COO⁻, (R^{a}CO)₂N⁻, (R^{a}SO₂)₂N⁻, N(CN)₂⁻ und C(CN)₃⁻, wobei R^{a} ein linearer oder verzweigter aliphatischer Kohlenwasserstoffrest mit 1 bis 30 Kohlenstoffatomen, ein cycloaliphatischer Kohlenwasserstoffrest mit 5 bis 40 Kohlenstoffatomen, ein aromatischer Kohlenwasserstoffrest mit 6 bis 40 Kohlenstoffatomen, ein Alkylarylrest mit 7 bis 40 Kohlenstoffatomen oder ein linearer oder verzweigter Perfluoralkylrest mit 1 bis 30 Kohlenstoffatomen ist, sowie Saccharinat und Anionen der Formeln R^{a}OSO₃⁻ und R^{a}SO₃⁻, in denen R^{a} ein Polyetherrest ist.

Vorzugsweise sind das oder die Anionen der ionischen Flüssigkeit ausgewählt aus Hydroxid, Halogeniden, Nitrat, Nitrit, Carboxylaten, Phosphat, Alkylphosphaten, Dialkylphosphaten, Thiocyanat, Cyanat, Dicyanamid, Sulfat, Alkylsulfaten, Alkylsulfonaten, Tetrafluoroborat und Hexafluorophosphat und besonders bevorzugt ausgewählt aus der Gruppe bestehend aus Hydroxid, Chlorid, Bromid, Nitrat, Nitrit, Formiat, Acetat, Propionat, Glykolat, Dimethylphosphat, Diethylphosphat, Methylsulfat und Ethylsulfat.

In einer bevorzugten Ausführungsform umfasst das Arbeitsmedium eine ionische Flüssigkeit mit Phosphat- oder Phosphonationen, insbesondere Dimethylphosphat oder Diethylphosphat, in Kombination mit Methanol oder Ethanol als Kältemittel. Durch diese Kombination lassen sich bei der Verwendung des Arbeitsmediums in einer Absorptionswärmepumpe gleichzeitig ein hoher Stoff- und Wärmeübergang im Absorber und eine geringe Korrosion erzielen und eine Verfestigung der ionischen Flüssigkeit im Sorptionsmittelkreislauf vermeiden.

Das oder die organischen Kationen der ionischen Flüssigkeit können einfach, zweifach oder mehrfach positiv geladen sein und sind vorzugsweise einfach positiv geladen. Bevorzugt weisen das oder die organischen Kationen der ionischen Flüssigkeit ein Molekulargewicht von höchstens 260 g/mol auf, besonders bevorzugt von höchstens 220 g/mol, insbesondere von höchstens 195 g/mol und am meisten bevorzugt von höchstens 170 g/mol. Die Beschränkung der molaren Masse des Kations verbessert die Ausgasungsbreite des Arbeitsmediums bei dem Betrieb einer Absorptionswärmepumpe.

Als organische Kationen eignen sich insbesondere Kationen der allgemeinen Formeln (I) bis (V):

R¹R²R³R⁴N⁺ (I)

R¹R²R³R⁴P⁺ (I)

R¹R²R³S⁺ (III)

R¹R²N⁺=C (NR³R⁴) (NR⁵R⁶) (IV)

R¹R²N⁺=C (NR³R⁴) (XR⁵) (V)

in denen
R¹,R²,R³,R⁴,R⁵,R⁶ gleich oder unterschiedlich sind und Wasserstoff, einen linearen oder verzweigten aliphatischen oder olefinischen Kohlenwasserstoffrest, einen cycloaliphatischen oder cycloolefinischen Kohlenwasserstoffrest, einen aromatischen Kohlenwasserstoffrest, einen Alkylarylrest, einen endständig durch OH, OR', NH₂, N(H)R' oder N(R')₂ funktionalisierten linearen oder verzweigten aliphatischen oder olefinischen Kohlenwasserstoffrest oder einen Polyetherrest der Formel -(R⁷-O)ₙ-R⁸ bedeuten, wobei für Kationen der Formel (V) R⁵ nicht Wasserstoff ist,
R' ein aliphatischer oder olefinischer Kohlenwasserstoffrest ist,
R⁷ ein 2 oder 3 Kohlenstoffatome enthaltender linearer oder verzweigter Alkylenrest ist,
n von 1 bis 3 ist,
R⁸ Wasserstoff oder ein linearer oder verzweigter aliphatischer oder olefinischer Kohlenwasserstoffrest ist,
X ein Sauerstoffatom oder ein Schwefelatom ist, und
wobei mindestens einer und vorzugsweise jeder der Reste R¹, R², R³, R⁴, R⁵ und R⁶ von Wasserstoff verschieden ist.

Ebenso geeignet sind Kationen der Formeln (I) bis (V), in denen die Reste R¹ und R³ zusammen einen 4- bis 10-gliedrigen, vorzugsweise 5- bis 6-gliedrigen, Ring bilden.

Ebenfalls geeignet sind heteroaromatische Kationen mit mindestens einem quaternären Stickstoffatom im Ring, das einen wie oben definierten Rest R¹ trägt, vorzugsweise am Stickstoffatom substituierte Derivate von Pyrrol, Pyrazol, Imidazol, Oxazol, Isoxazol, Thiazol, Isothiazol, Pyridin, Pyrimidin, Pyrazin, Indol, Chinolin, Isochinolin, Cinnolin, Chinoxalin oder Phthalazin.

Vorzugsweise enthält das organische Kation ein quaternäres Stickstoffatom. Das organische Kation ist vorzugsweise ein 1-Alkylimidazoliumion, 1,3-Dialkylimidazoliumion, 1,3-Dialkylimidazoliniumion, N-Alkylpyridiniumion, N,N-Dialkylpyrrolidiniumion oder ein Ammoniumion der Struktur R¹R²R³R⁴N⁺, wobei R¹, R² und R³ unabhängig voneinander Wasserstoff, Alkyl oder Hydroxyethyl sind und R⁴ ein Alkylrest ist.

In einer bevorzugten Ausführungsform ist das organische Kation ein 1,3-Dialkylimidazoliumion, wobei die Alkylgruppen unabhängig voneinander ausgewählt sind aus Methyl, Ethyl, n-Propyl und n-Butyl.

In einer weiteren bevorzugten Ausführungsform sind die organischen Kationen N-alkylierte Alkylpyridiniumionen, im Folgenden als N-Alkyl-alkylpyridiniumionen bezeichnet, die durch Alkylierung einer Mischung von am Stickstoffatom unsubstituierten Alkylpyridinen erhältlich sind, vorzugsweise N-Methyl-alkylpyridiniumionen und N-Butylalkylpyridiniumionen. Besonders bevorzugt sind N-Alkyl-alkylpyridiniumionen, die durch Alkylierung einer Mischung aus Picolinen, Dimethylpyridinen und Ethylpyridinen erhältlich sind.

Bevorzugte organische Kationen sind 1-Methylimidazolium, 1,3-Dimethylimidazolium, 1-Ethyl-3-methylimidazolium, 1-Butyl-3-methylimidazolium und 2-Hydroxyethyltrimethylammonium.

In einer bevorzugten Ausführungsform des erfindungsgemäßen Arbeitsmediums ist das Kältemittel Wasser und die ionische Flüssigkeit 2-Hydroxyethyl-trimethylammoniumacetat, 2-Hydroxyethyl-trimethylammoniumchlorid, 2-Hydroxyethyl-trimethylammoniumglycolat, 1-Ethyl-3-methylimidazoliumacetat, 1-Ethyl-3-methylimidazoliumchlorid, 1-Ethyl-3-methylimidazoliumethylphosphat, 1-Ethyl-3-methylimidazoliummethylphosphat, 1,3-Diethylimidazoliumdiethylphosphat, 1,3-Dimethylimidazoliumacetat 1,3-Dimethylimidazoliumpropionat N-Butyl-alkylpyridiniumchloride, N-Butyl-alkylpyridiniumacetate, N-Methyl-alkylpyridiniumchloride, N-Methyl-alkylpyridiniumacetate, N-Butylpyridiniumchlorid, N-Butylpyridiniumacetat, N-Methylpyridiniumchlorid, N-Methylpyridiniumacetat, Tetramethylammoniumformiat, Tetramethylammoniumacetat, 1-Butyl-trimethylammoniumacetat, 1-Butyl-trimethylammoniumchlorid, 1-Butyl-trimethylammoniumformiat, 1-Butyl-4-methylpiperidiniumacetat, N-Butyl-N-methyl-pyrrolidiniumacetat oder eine Mischung aus zwei oder mehreren der genannten ionischen Flüssigkeiten. Mit diesen Arbeitsmedien wird in einer Absorptionswärmepumpe gleichzeitig eine besonders hohe Ausgasungsbreite und ein besonders hoher Wirkungsgrad COP erreicht.

In einer weiteren bevorzugten Ausführungsform des erfindungsgemäßen Arbeitsmediums ist das Kältemittel Methanol oder Ethanol und die ionische Flüssigkeit 2-Hydroxyethyl-trimethylammoniumacetat, 2-Hydroxyethyl-trimethylammoniumglycolat, 1-Ethyl-3-methylimidazoliumacetat, 1-Ethyl-3-methylimidazoliumethylphosphat, 1-Ethyl-3-methylimidazoliumdimethylphosphat, 1-Ethyl-3-methylimidazoliumdiethylphosphat, 1-Ethyl-3-methylimidazoliumhydrogensulfat, 1-Ethyl-3-methylimidazoliumethylsulfat, 1-Ethyl-3-methylimidazoliummethylsulfat, 1,3-Dimethylimidazoliummethylsulfat, 1,3-Diethylimidazoliumdiethylphosphat, 1,3-Diethylimidazoliumdimethylphosphat, N-Butyl-alkylpyridiniumacetate, N-Methyl-alkylpyridiniumacetate, N-Butylpyridiniumacetat, N-Methylpyridiniumacetat, 1-Butyl-trimethylammoniumacetat, 1-Butyl-trimethylammoniumformiat, 1-Butyl-4-methylpiperidiniumacetat, N-Butyl-N-methylpyrrolidiniumacetat N,N-Dimethylpyrrolidiniumacetat oder eine Mischung aus zwei oder mehreren der genannten ionischen Flüssigkeiten. Mit diesen Arbeitsmedien kann in einer Absorptionskältemaschine bei geringem apparativem Aufwand eine Abkühlung auf Temperaturen unterhalb 0 °C durchgeführt und dabei ein hoher Wirkungsgrad COP erreicht werden.

Die ionischen Flüssigkeiten können nach aus dem Stand der Technik bekannten Verfahren hergestellt werden, beispielsweise wie in P. Wasserscheid, T. Welton, Ionic Liquids in Synthesis, 2nd edition, Wiley-VCH (2007), ISBN 3-527-31239-0 oder in Angew. Chemie 112 (2000) Seiten 3926-3945 beschrieben.

Die ionische Flüssigkeiten ist vorzugsweise bei 20 °C flüssig und weist bei dieser Temperatur eine Viskosität gemäß DIN 53 019 von 1 bis 15.000 mPas, besonders bevorzugt von 2 bis 10.000 mPa·s, insbesondere 5 bis 5.000 mPa·s und am meisten bevorzugt von 10 bis 3.000 mPa·s auf. Bei einer Temperatur von 50 °C weist die ionische Flüssigkeit vorzugsweise eine Viskosität von weniger als 3.000 mPa·s, besonders bevorzugt von weniger als 2.000 mPa·s und insbesondere von weniger als 1.000 mPa·s auf.

Vorzugsweise werden ionische Flüssigkeiten verwendet, die mit Wasser unbegrenzt mischbar, hydrolysestabil und bis zu einer Temperatur von 100°C thermisch stabil sind.

Hydrolysestabile ionische Flüssigkeiten zeigen in einer Mischung mit 50 Gew.-% Wasser bei einer Lagerung bei 80°C innerhalb von 8000 h weniger als 5 % Abbau durch Hydrolyse.

Bis zu einer Temperatur von 100°C thermisch stabile ionische Flüssigkeiten zeigen in einer thermogravimetrischen Analyse unter Stickstoffatmosphäre beim Aufheizen von 25 °C auf 100 °C mit einer Heizrate von 10 °C/min eine Gewichtsabnahme von weniger als 20 %. Besonders bevorzugt sind ionische Flüssigkeiten, die bei der Analyse eine Gewichtsabnahme von weniger als 10 % und insbesondere weniger als 5 % zeigen.

Das erfindungsgemäße Arbeitsmedium kann zusätzlich zu Kältemittel, ionischer Flüssigkeit und dem einwertigen aliphatischen Alkohol mit 6 bis 10 Kohlenstoffatomen noch weitere Additive, vorzugsweise Korrosionsinhibitoren, enthalten. Der Anteil an Korrosionsinhibitoren beträgt vorzugsweise 10 bis 50.000 ppm, besonders bevorzugt 100 bis 10.000 ppm, bezogen auf die Masse der ionischen Flüssigkeit. Bevorzugte anorganische Korrosionsinhibitoren sind Li₂CrO₄, Li₂MoO₄, Li₃VO, LiVO₃, NiBr₂, Li₃PO₄, CoBr₂ und LiOH. Geeignete organische Korrosionsinhibitoren sind Amine und Alkanolamine, vorzugsweise 2-Aminoethanol, 2-Aminopropanol und 3-Aminopropanol, sowie als Fettsäurealkylolamide bezeichnete Amide von Fettsäuren mit Alkanolaminen und deren Alkoxylate. Geeignet ist beispielsweise die unter dem Handelsnamen REWOCOROS® AC 101 von Evonik Goldschmidt GmbH erhältliche Mischung aus 2-Aminoethanol und Ölsäureamidoethanol-Polyethoxylat. Als Korrosionsinhibitoren eignen sich außerdem organische Phosphorsäureester, insbesondere Phosphorsäureester von ethoxylierten Fettalkoholen, sowie Fettsäure-Alkanolamin-Gemische. Bevorzugte organische Korrosionsinhibitoren sind Benzimidazol und insbesondere Benzotriazol.

Vorzugsweise zeigt das erfindungsgemäße Arbeitsmedium in einem Korrosionstest gemäß ASTM D1384 für alle Testmaterialien einen Abtrag von weniger als 5 g/m², besonders bevorzugt weniger als 3 g/m² und insbesondere weniger als 2 g/m². Bei diesem Test werden exakt gewogene, mit einer Bohrung versehene Metallplättchen aus Kupfer, Weichlot, Messing, Stahl, Grauguss und Guss-Aluminium in einem Gestell auf einem isolierten Stab hintereinander angeordnet. Kupfer, Weichlot und Messing werden durch Distanzstücke aus Messing, Stahl, Grauguss und Guss-Aluminium durch Distanzstücke aus Stahl jeweils leitend verbunden, die entstehenden "Pakete" jedoch voneinander isoliert. Der Prüfkörper wird in das Medium eingetaucht und es wird 14 Tage lang unter Einleiten von Luft auf 88°C erhitzt. Anschließend werden die Plättchen gereinigt, erneut gewogen und der Abtrag ermittelt.

Bevorzugt sind Arbeitsmedien mit einer Kombination von Kältemittel und ionischer Flüssigkeit, für die der Dampfdruck einer Mischung aus 90 Gew.-% ionischer Flüssigkeit und 10 Gew.-% Kältemittel bei 35 °C weniger als 60 %, besonders bevorzugt weniger als 30 %, insbesondere weniger als 20 % und am meisten bevorzugt weniger als 15 % des Dampfdrucks des reinen Kältemittels bei 35 °C beträgt. Mit einer solchen Kombination von Kältemittel und ionischer Flüssigkeit kann eine hohe Ausgasungsbreite erzielt werden und die Menge an Arbeitsmedium im Kreislauf der Absorptionswärmepumpe verringert werden.

Die erfindungsgemäße Absorptionswärmepumpe umfasst einen Absorber, einen Desorber, einen Kondensator, einen Verdampfer und ein erfindungsgemäßes Arbeitsmedium wie weiter oben beschrieben.

Im Betrieb der erfindungsgemäßen Absorptionswärmepumpe wird im Absorber dampfförmiges Kältemittel in kältemittelarmem Arbeitsmedium absorbiert unter Erhalt eines kältemittelreichen Arbeitsmediums und unter Freisetzung von Absorptionswärme. Aus dem so erhaltenen kältemittelreichen Arbeitsmedium wird im Desorber unter Wärmezufuhr Kältemittel dampfförmig desorbiert unter Erhalt von kältemittelarmem Arbeitsmedium, das in den Absorber zurückgeführt wird. Das im Desorber erhaltene dampfförmige Kältemittel wird im Kondensator unter Freisetzung von Kondensationswärme kondensiert, das erhaltene flüssige Kältemittel wird im Verdampfer unter Aufnahme von Verdampfungswärme verdampft und das dabei erhaltene dampfförmige Kältemittel wird in den Absorber zurückgeführt.

Die erfindungsgemäße Absorptionswärmepumpe kann sowohl einstufig als auch mehrstufig mit mehreren gekoppelten Kreisläufen des Arbeitsmediums ausgeführt sein.

In einer bevorzugten Ausführungsform ist die Absorptionswärmepumpe eine Absorptionskältemaschine und im Verdampfer wird Wärme aus einem zu kühlenden Medium aufgenommen.

Die erfindungsgemäße Absorptionswärmepumpe weist gegenüber den aus WO 2005/113702 und WO 2006/134015 bekannten Absorptionswärmepumpen mit einer ionischen Flüssigkeit als Sorptionsmittel einen höheren Wirkungsgrad auf.

### Beispiele

Eine Absorptionskältemaschine Modell CH-MG 150 der Firma YAZAKI wurde mit Arbeitsmedien aus 80 Gew.-% ionischer Flüssigkeit und 20 Gew.-% Kältemittel bei einer Antriebstemperatur von 85°C und einer Kühlwassertemperatur von 30°C mit einer Kühlleistung von ca. 527 kW betrieben und der Wirkungsgrad COP mit der in F. Ziegler, Int. J. Therm. Sci. 38 (1999) Seiten 191-208 beschriebenen Methode bestimmt. Die Arbeitsmedien wurden jeweils ohne Zusatz von Additiv und mit Zusatz von 0,01 Gew.-% 2-Ethyl-1-hexanol (2EHL) untersucht.

Tabelle 1 zeigt die Ergebnisse für Arbeitsmedien mit Wasser als Kältemittel und Tabelle 2 die Ergebnisse für Arbeitsmedien mit Ethanol als Kältemittel. In den Tabellen bezeichnen die Abkürzungen folgende ionische Flüssigkeiten:
- EMIM Cl: 1-Ethyl-3-methylimidazoliumchlorid
- EMIM OAc: 1-Ethyl-3-methylimidazoliumacetat
- EMIM DMP: 1-Ethyl-3-methylimidazoliumdimethylphosphat
- EMIM DEP: 1-Ethyl-3-methylimidazoliumdiethylphosphat
- Cholin OAc: 2-Hydroxyethyl-trimethylammoniumacetat
- BAP Cl: N-Butyl-alkylpyridiniumchloride
- BMIM Cl: 1-Butyl-3-methylimidazoliumchlorid
- MMIM OAc: 1,3-Dimethylimidazoliumacetat
- MMIM OPr: 1,3-Dimethylimidazoliumpropionat

**Tabelle 1**

| Arbeitsmedien mit Wasser als Kältemittel | | |
|---|---|---|
| Ionische Flüssigkeit | Wirkungsgrad COP ohne Additiv | Wirkungsgrad COP mit 0,01 Gew.-% 2EHL |
| EMIM Cl | 0,62 | 0,70 |
| EMIM OAc | 0,69 | 0,75 |
| MMIM OAc | 0,61 | 0,73 |
| MMIM OPr | 0,64 | 0,78 |
| Cholin OAc | 0,68 | 0,75 |
| BAP Cl | 0,65 | 0,72 |

**Tabelle 2**

| Arbeitsmedien mit Ethanol als Kältemittel | | |
|---|---|---|
| Ionische Flüssigkeit | Wirkungsgrad COP ohne Additiv | Wirkungsgrad COP mit 0,01 Gew.-% 2EHL |
| BMIM Cl | 0,41 | 0,44 |
| EMIM DMP | 0,54 | 0,58 |
| EMIM DEP | 0,57 | 0,60 |

Die Beispiele zeigen, dass durch den Zusatz von 2-Ethyl-1-hexanol zum Arbeitsmedium sowohl für Wasser als auch für Ethanol als Kältemittel bei allen untersuchten ionischen Flüssigkeiten unabhängig vom Anion oder organischen Kation eine Verbesserung des Wirkungsgrads COP gefunden wird.

## Patentansprüche

1. Arbeitsmedium für Absorptionswärmepumpen, umfassend mindestens ein Kältemittel, mindestens einen einwertigen aliphatischen Alkohol mit 6 bis 10 Kohlenstoffatomen und mindestens eine ionische Flüssigkeit aus mindestens einem organischen Kation und mindestens einem Anion.

2. Arbeitsmedium nach Anspruch 1, **dadurch gekennzeichnet, dass** es 4 bis 67 Gew.-% Kältemittel, 0,0001 bis 10 Gew.-% Alkohol mit 6 bis 10 Kohlenstoffatomen und 30 bis 95 Gew.-% ionische Flüssigkeit umfasst.

3. Arbeitsmedium nach Anspruch 1 oder 2, **dadurch gekennzeichnet, dass** der Alkohol ein primärer Alkohol ist.

4. Arbeitsmedium nach einem der vorangehenden Ansprüche, **dadurch gekennzeichnet, dass** der Alkohol einen verzweigten Alkylrest aufweist und vorzugsweise 2-Ethyl-1-hexanol ist.

5. Arbeitsmedium nach einem der vorangehenden Ansprüche, **dadurch gekennzeichnet, dass** das Kältemittel ausgewählt ist aus Wasser, Methanol, Ethanol und Mischungen dieser Kältemittel.

6. Arbeitsmedium nach Anspruch 5, **dadurch gekennzeichnet, dass** das Kältemittel ausgewählt ist aus Methanol, Ethanol, Mischungen von Methanol und Ethanol, Mischungen von Ethanol mit Wasser und Mischungen von Methanol mit Wasser.

7. Arbeitsmedium nach einem der vorangehenden Ansprüche, **dadurch gekennzeichnet, dass** das oder die Anionen der ionischen Flüssigkeit ein Molekulargewicht von höchstens 260 g/mol aufweisen.

8. Arbeitsmedium nach einem der vorangehenden Ansprüche, **dadurch gekennzeichnet, dass** das oder die Anionen der ionischen Flüssigkeit ausgewählt sind aus den Anionen Hydroxid, Halogeniden, Nitrat, Nitrit, Carboxylaten, Phosphat, Alkylphosphaten, Dialkylphosphaten, Thiocyanat, Cyanat, Dicyanamid, Sulfat, Alkylsulfaten, Alkylsulfonaten, Tetrafluoroborat und Hexafluorophosphat und bevorzugt ausgewählt sind aus der Gruppe bestehend aus Hydroxid, Chlorid, Bromid, Nitrat, Nitrit, Formiat, Acetat, Propionat, Glykolat, Dimethylphosphat, Diethylphosphat, Methylsulfat und Ethylsulfat.

9. Arbeitsmedium nach einem der vorangehenden Ansprüche, **dadurch gekennzeichnet, dass** das oder die organischen Kationen der ionischen Flüssigkeit ein Molekulargewicht von höchstens 260 g/mol aufweisen.

10. Arbeitsmedium nach einem der vorangehenden Ansprüche, **dadurch gekennzeichnet, dass** das oder die organischen Kationen der ionischen Flüssigkeit ausgewählt sind aus 1-Alkylimidazoliumionen, 1,3-Dialkylimidazoliumionen, 1,3-Dialkylimidazoliniumionen, N-Alkylpyridiniumionen, N,N-Dialkylpyrrolidiniumionen und Ammoniumionen der Struktur R¹R²R³R⁴N⁺, wobei R¹, R² und R³ unabhängig voneinander Wasserstoff, Alkyl oder Hydroxyethyl sind und R⁴ ein Alkylrest ist, und bevorzugt ausgewählt sind aus der Gruppe bestehend aus 1-Methylimidazolium, 1,3-Dimethylimidazolium, 1-Ethyl-3-methylimidazolium, 1-Butyl-3-methylimidazolium und 2-Hydroxyethyltrimethylammonium.

11. Arbeitsmedium nach einem der vorangehenden Ansprüche, **dadurch gekennzeichnet, dass** das Kältemittel Wasser ist und die ionische Flüssigkeit ausgewählt ist aus
2-Hydroxyethyl-trimethylammoniumacetat,
2-Hydroxyethyl-trimethylammoniumchlorid,
2-Hydroxyethyl-trimethylammoniumglycolat,
1-Ethyl-3-methylimidazoliumacetat,
1-Ethyl-3-methylimidazoliumchlorid,
1-Ethyl-3-methylimidazoliumethylphosphat,
1-Ethyl-3-methylimidazoliummethylphosphat,
1,3-Diethylimidazoliumdiethylphosphat,
1,3-Dimethylimidazoliumacetat
1,3-Dimethylimidazoliumpropionat
N-Butyl-alkylpyridiniumchloriden,
N-Butyl-alkylpyridiniumacetaten,
N-Methyl-alkylpyridiniumchloriden,
N-Methyl-alkylpyridiniumacetaten,
N-Butylpyridiniumchlorid, N-Butylpyridiniumacetat,
N-Methylpyridiniumchlorid, N-Methylpyridiniumacetat,
Tetramethylammoniumformiat, Tetramethylammoniumacetat,
1-Butyl-trimethylammoniumacetat,
1-Butyl-trimethylammoniumchlorid,
1-Butyl-trimethylammoniumformiat,
1-Butyl-4-methylpiperidiniumacetat,
N-Butyl-N-methyl-pyrrolidiniumacetat und deren Mischungen.

12. Arbeitsmedium nach einem der vorangehenden Ansprüche, **dadurch gekennzeichnet, dass** das Kältemittel Methanol oder Ethanol ist und die ionische Flüssigkeit ausgewählt ist aus
2-Hydroxyethyl-trimethylammoniumacetat,
2-Hydroxyethyl-trimethylammoniumglycolat,
1-Ethyl-3-methylimidazoliumacetat,
1-Ethyl-3-methylimidazoliumethylphosphat,
1-Ethyl-3-methylimidazoliumdimethylphosphat,
1-Ethyl-3-methylimidazoliumdiethylphosphat,
1-Ethyl-3-methylimidazoliumhydrogensulfat,
1-Ethyl-3-methylimidazoliumethylsulfat,
1-Ethyl-3-methylimidazoliummethylsulfat,
1,3-Dimethylimidazoliummethylsulfat,
1,3-Diethylimidazoliumdiethylphosphat,
1,3-Diethylimidazoliumdimethylphosphat,
N-Butyl-alkylpyridiniumacetaten,
N-Methyl-alkylpyridiniumacetaten,
N-Butylpyridiniumacetat, N-Methylpyridiniumacetat,
1-Butyl-trimethylammoniumacetat,
1-Butyl-trimethylammoniumformiat,
1-Butyl-4-methylpiperidiniumacetat,
N-Butyl-N-methylpyrrolidiniumacetat
N,N-Dimethylpyrrolidiniumacetat und deren Mischungen.

13. Absorptionswärmepumpe umfassend einen Absorber, einen Desorber, einen Kondensator, einen Verdampfer und ein Arbeitsmedium gemäß einem der Ansprüche 1 bis 12.

14. Absorptionswärmepumpe nach Anspruch 13, **dadurch gekennzeichnet,**
**dass** sie eine Absorptionskältemaschine ist und im Verdampfer Wärme aus einem zu kühlenden Medium aufnimmt.

## Claims

1. Working medium for absorption heat pumps, comprising at least one refrigerant, at least one monohydric aliphatic alcohol having from 6 to 10 carbon atoms and at least one ionic liquid composed of at least one organic cation and at least one anion.

2. Working medium according to Claim 1, **characterized in that** it comprises from 4 to 67% by weight of refrigerant, from 0.0001 to 10% by weight of alcohol having from 6 to 10 carbon atoms and from 30 to 95% by weight of ionic liquid.

3. Working medium according to Claim 1 or 2, **characterized in that** the alcohol is a primary alcohol.

4. Working medium according to any of the preceding claims, **characterized in that** the alcohol has a branched alkyl radical and is preferably 2-ethyl-1-hexanol.

5. Working medium according to any of the preceding claims, **characterized in that** the refrigerant is selected from among water, methanol, ethanol and mixtures of these refrigerants.

6. Working medium according to Claim 5, **characterized in that** the refrigerant is selected from among methanol, ethanol, mixtures of methanol and ethanol, mixtures of ethanol with water and mixtures of methanol with water.

7. Working medium according to any of the preceding claims, **characterized in that** the anion or anions of the ionic liquid has/have a molecular weight of not more than 260 g/mol.

8. Working medium according to any of the preceding claims, **characterized in that** the anion or anions of the ionic liquid is/are selected from among the anions hydroxide, halides, nitrate, nitrite, carboxylates, phosphate, alkylphosphates, dialkylphosphates, thiocyanate, cyanate, dicyanamide, sulphate, alkylsulphates, alkylsulphonates, tetrafluoroborate and hexafluorophosphate and is/are preferably selected from the group consisting of hydroxide, chloride, bromide, nitrate, nitrite, formate, acetate, propionate, glycolate, dimethylphosphate, diethylphosphate, methylsulphate and ethylsulphate.

9. Working medium according to any of the preceding claims, **characterized in that** the organic cation or cations of the ionic liquid has/have a molecular weight of not more than 260 g/mol.

10. Working medium according to any of the preceding claims, **characterized in that** the organic cation or cations of the ionic liquid is/are selected from among 1-alkylimidazolium ions, 1,3-dialkylimidazolium ions, 1,3-dialkylimidazolinium ions, N-alkylpyridinium ions, N,N-dialkylpyrrolidinium ions and ammonium ions having the structure R¹R²R³R⁴N⁺, where R¹, R² and R³ are each, independently of one another, hydrogen, alkyl or hydroxyethyl and R⁴ is an alkyl radical, and are preferably selected from the group consisting of 1-methylimidazolium, 1,3-dimethylimidazolium, 1-ethyl-3-methylimidazolium, 1-butyl-3-methylimidazolium and 2-hydroxyethyltrimethylammonium.

11. Working medium according to any of the preceding claims, **characterized in that** the refrigerant is water and the ionic liquid is selected from among
2-hydroxyethyltrimethylammonium acetate,
2-hydroxyethyltrimethylammonium chloride,
2-hydroxyethyltrimethylammonium glycolate,
1-ethyl-3-methylimidazolium acetate,
1-ethyl-3-methylimidazolium chloride,
1-ethyl-3-methylimidazolium ethylphosphate,
1-ethyl-3-methylimidazolium methylphosphate,
1,3-diethylimidazolium diethylphosphate,
1,3-dimethylimidazolium acetate,
1,3-dimethylimidazolium propionate,
N-butylalkylpyridinium chlorides,
N-butyl-alkylpyridinium acetates,
N-methylalkylpyridinium chlorides,
N-methyl-alkylpyridinium acetates,
N-butylpyridinium chloride, N-butylpyridinium acetate,
N-methylpyridinium chloride, N-methylpyridinium
acetate, tetramethylammonium formate,
tetramethylammonium acetate, 1-butyltrimethylammonium acetate,
1-butyltrimethylammonium chloride,
1-butyltrimethylammonium formate,
1-butyl-4-methylpiperidinium acetate,
N-butyl-N-methylpyrrolidinium acetate and mixtures thereof.

12. Working medium according to any of the preceding claims, **characterized in that** the refrigerant is methanol or ethanol and the ionic liquid is selected from among
2-hydroxyethyltrimethylammonium acetate,
2-hydroxyethyltrimethylammonium glycolate,
1-ethyl-3-methylimidazolium acetate,
1-ethyl-3-methylimidazolium ethylphosphate,
1-ethyl-3-methylimidazolium dimethylphosphate,
1-ethyl-3-methylimidazolium diethylphosphate,
1-ethyl-3-methylimidazolium hydrogensulphate,
1-ethyl-3-methylimidazolium ethylsulphate,
1-ethyl-3-methylimidazolium methylsulphate,
1,3-dimethylimidazolium methylsulphate,
1,3-diethylimidazolium diethylphosphate,
1,3-diethylimidazolium dimethylphosphate,
N-butylalkylpyridinium acetates,
N-methyl-alkylpyridinium acetates,
N-butylpyridinium acetate, N-methylpyridinium acetate,
1-butyltrimethylammonium acetate,
1-butyltrimethylammonium formate,
1-butyl-4-methylpiperidinium acetate,
N-butyl-N-methylpyrrolidinium acetate
N,N-dimethylpyrrolidinium acetate and mixtures thereof.

13. Absorption heat pump comprising an absorber, a desorber, a condenser, an evaporator and a working medium according to any of Claims 1 to 12.

14. Absorption heat pump according to Claim 13, **characterized in that** it is an absorption refrigeration machine and in the evaporator takes up heat from a medium to be cooled.

## Revendications

1. Milieu de travail pour pompes à chaleur par absorption, comprenant au moins un réfrigérant, au moins un alcool aliphatique monovalent comprenant 6 à 10 atomes de carbone et au moins un liquide ionique constitué par au moins un cation organique et au moins un anion.

2. Milieu de travail selon la revendication 1, **caractérisé en ce qu'**il contient 4 à 67% en poids de réfrigérant, 0,0001 à 10% en poids d'alcool comprenant 6 à 10 atomes de carbone et 30 à 95% en poids de liquide ionique.

3. Milieu de travail selon la revendication 1 ou 2, **caractérisé en ce que** l'alcool est un alcool primaire.

4. Milieu de travail selon l'une quelconque des revendications précédentes, **caractérisé en ce que** l'alcool présente un radical alkyle ramifié et est de préférence le 2-éthyl-1-hexanol.

5. Milieu de travail selon l'une quelconque des revendications précédentes, **caractérisé en ce que** le réfrigérant est choisi parmi l'eau, le méthanol, l'éthanol et les mélanges de ces réfrigérants.

6. Milieu de travail selon la revendication 5, **caractérisé en ce que** le réfrigérant est choisi parmi le méthanol, l'éthanol, les mélanges de méthanol et d'éthanol, les mélanges d'éthanol et d'eau et les mélanges de méthanol et d'eau.

7. Milieu de travail selon l'une quelconque des revendications précédentes, **caractérisé en ce que** le ou les anions du liquide ionique présentent un poids moléculaire d'au plus 260 g/mole.

8. Milieu de travail selon l'une quelconque des revendications précédentes, **caractérisé en ce que** le ou les anions du liquide ionique sont choisis parmi les anions hydroxyde, halogénure, nitrate, nitrite, carboxylate, phosphate, alkylphosphate, dialkylphosphate, thiocyanate, cyanate, dicyanamide, sulfate, alkylsulfate, alkylsulfonate, tétrafluoroborate et hexafluorophosphate et de préférence choisis dans le groupe constitué par hydroxyde, chlorure, bromure, nitrate, nitrite, formiate, acétate, propionate, glycolate, diméthylphosphate, diéthylphosphate, méthylsulfate et éthylsulfate.

9. Milieu de travail selon l'une quelconque des revendications précédentes, **caractérisé en ce que** le ou les cations organiques du liquide ionique présentent un poids moléculaire d'au plus 260 g/mole.

10. Milieu de travail selon l'une quelconque des revendications précédentes, **caractérisé en ce que** le ou les cations organiques du liquide ionique sont choisis parmi les ions 1-alkylimidazolium, 1,3-dialkylimidazolium, 1,3-dialkylimidazolinium, N-alkylpyridinium, N,N-dialkylpyrrolidinium et les ions d'ammonium de structure R¹R²R³R⁴N⁺, R¹, R² et R³ représentant, indépendamment les uns des autres, hydrogène, alkyle ou hydroxyéthyle et R⁴ représentant un radical alkyle et sont de préférence choisis dans le groupe constitué par 1-méthylimidazolium, 1,3-diméthylimidazolium, 1-éthyl-3-méthylimidazolium, 1-butyl-3-méthylimidazolium et 2-hydroxyéthyltriméthylammonium.

11. Milieu de travail selon l'une quelconque des revendications précédentes, **caractérisé en ce que** le réfrigérant est l'eau et le liquide ionique est choisi parmi l'acétate de 2-hydroxyéthyltriméthylammonium, le chlorure de 2-hydroxyéthyltriméthylammonium, le glycolate de 2-hydroxyéthyltriméthylammonium, l'acétate de 1-éthyl-3-méthylimidazolium, le chlorure de 1-éthyl-3-méthylimidazolium, l'éthylphosphate de 1-éthyl-3-méthylimidazolium, le méthylphosphate de 1-éthyl-3-méthylimidazolium, le diéthylphosphate de 1,3-diéthylimidazolium, l'acétate de 1,3-diméthylimidazolium, le propionate de 1,3-diméthylimidazolium, les chlorures de N-butylalkylpyridinium, les acétates de N-butylalkylpyridinium, les chlorures de N-méthylalkylpyridinium, les acétates de N-méthylalkylpyridinium, le chlorure de N-butylpyridinium, l'acétate de N-butylpyridinium, le chlorure de N-méthylpyridinium, l'acétate de N-méthylpyridinium, le formiate de tétraméthylammonium, l'acétate de tétraméthylammonium, l'acétate de 1-butyltriméthylammonium, le chlorure de 1-butyltriméthylammonium, le formiate de 1-butyltriméthylammonium, l'acétate de 1-butyl-4-méthylpipéridinium, l'acétate de N-butyl-N-méthylpyrrolidinium et leurs mélanges.

12. Milieu de travail selon l'une quelconque des revendications précédentes, **caractérisé en ce que** le réfrigérant est le méthanol ou l'éthanol et le liquide ionique est choisi parmi l'acétate de 2-hydroxyéthyltriméthylammonium, le glycolate de 2-hydroxyéthyltriméthylammonium, l'acétate de 1-éthyl-3-méthylimidazolium, l'éthylphosphate de 1-éthyl-3-méthylimidazolium, le diméthylphosphate de 1-éthyl-3-méthylimidazolium, le diéthylphosphate de 1-éthyl-3-méthylimidazolium, l'hydrogénosulfate de 1-éthyl-3-méthylimidazolium, l'éthylsulfate de 1-éthyl-3-méthylimidazolium, le méthylsulfate de 1-éthyl-3-méthylimidazolium, le méthylsulfate de 1,3-diméthylimidazolium, le diéthylphosphate de 1,3-diéthylimidazolium, le diméthylphosphate de 1,3-diéthylimidazolium, les acétates de N-butylalkylpyridinium, les acétates de N-méthylalkylpyridinium, l'acétate de N-butylpyridinium, l'acétate de N-méthylpyridinium, l'acétate de 1-butyltriméthylammonium, le formiate de 1-butyltriméthylammonium, l'acétate de 1-butyl-4-méthylpipéridinium, l'acétate de N-butyl-N-méthylpyrrolidinium, l'acétate de N,N-diméthylpyrrolidinium et leurs mélanges.

13. Pompe à chaleur par absorption comprenant un absorbant, un désorbant, un condenseur, un évaporateur et un milieu de travail selon l'une quelconque des revendications 1 à 12.

14. Pompe à chaleur par absorption selon la revendication 13, **caractérisée en ce qu'**il s'agit d'une machine réfrigérante par absorption et elle absorbe, dans l'évaporateur, de la chaleur provenant d'un milieu à refroidir.
